(19) Europäisches Patentamt
European Patent Office
Office européen des brevets

(11) EP 1 338 677 A1

(12) **EUROPEAN PATENT APPLICATION**
published in accordance with Art. 158(3) EPC

(43) Date of publication:
**27.08.2003 Bulletin 2003/35**

(21) Application number: **01908138.9**

(22) Date of filing: **28.02.2001**

(51) Int Cl.[7]: **C23C 22/07**, C23C 22/12, C23C 22/17, C23C 22/18, C23C 22/20, C23C 22/22, C10M 173/02, C10M 125/24, C10M 145/10

(86) International application number:
**PCT/JP01/01499**

(87) International publication number:
**WO 02/031223 (18.04.2002 Gazette 2002/16)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **06.10.2000 JP 2000307460**

(71) Applicant: **NIHON PARKERIZING CO., LTD.**
**Chuo-ku, Tokyo 103-0027 (JP)**

(72) Inventors:
- **NAKAMURA, Mitsuru,**
**c/o Nihon Parkerizing Co., Ltd**
**Tokyo 103-0027 (JP)**
- **HAYASHI, Yoshihiro,**
**c/o Nihon Parkerizing Co., Ltd**
**Tokyo 103-0027 (JP)**
- **NAKAYAMA, Takaomi,**
**c/o Nihon Parkerizing Co., Ltd**
**Tokyo 103-0027 (JP)**

(74) Representative: **VOSSIUS & PARTNER**
**Siebertstrasse 4**
**81675 München (DE)**

# (54) SURFACE-TREATING AGENT FOR METALLIC MATERIAL WITH EXCELLENT SUITABILITY FOR PRESS FORMING AND CHEMICAL TREATMENT AND METHOD OF TREATMENT

(57) A metallic sheet for motor vehicles which is excellent press forming property and chemical layer generation property, and a process for producing the sheet. The treating chemicals apply to a metal surface consists of (A) particles of phosphate of metal selected from Zn, Fe, Mn, Ni, Co, Ca, Mg and Al, the average size of the particles are 3 μm or smaller, (B) a dispersing agent, and water. It is applied to a metal surface and then dried. Dispersing agent (B) include orthophosphoric acid, polyphosphoric acid, and organic phosphonic acid compounds. (B) also include polymer formed from a monomer represented by the chemical formula(1). Further more, monosaccharides, polysaccharaides or derivatives of vinylacetate may also be used as (B). It is applied to the metal surface so as to form a film in an amount of 0.05 to 3g/$m^2$ on a dried basis.

EP 1 338 677 A1

## Description

FIELD OF THE INVENTION

This invention relates to a treatment for formation of film on a surface of metallic materials such as steel, aluminum and aluminum alloy in order to give a excellent property in press forming and surface chemical layer generation of the metallic material.

BACKGROUND ART

JP62-192597A has disclosed an electric plating process of forming a layer of zink-iron alloy on the surface of a galvanized steel sheet. However, it has a weak point of necessitating of the expensive electrolytic equipment and of expensive electric cost. And an application of high lubricative press oil on the metallic material makes difficult an oil removing operation in the following process.

JP07-138764A has disclosed a process of generation of composite compound layer of zink phosphate on a metal surface. However, this process requires expensive equipment since it contains many treating steps such as activation step, formation step of composite compound layer, water rinsing step and drying step. Also, heating is necessary in the formation step of composite compound layer and it requires expensive energy cost. Decreasing of the number of steps may be possible by applying a painting or by non water rinsing in the formation step of composite compound layer of zink phosphate. However, it arises problem in adhesion property for sealing material.

DISCLOSURE OF THE INVENTION

In this invention, a treating chemical containing phosphate particles and dispersing agent is applied to a metal surface, the purpose of this invention is to provide sheet metals for automobile industry having excellent properties in press forming and chemical layer generation by a decreased number of treating steps and in low cost.

As a result of study for solving afore mentioned problems, the inventors of this invention established novel surface treating process which solves these problems and which enables to give an excellent property in press forming and in chemical layer generation with a decreased number of treating steps and in decreased cost.

Namely, this invention relates to a treating chemical to be applied to a metal surface which contains as main constituent,

(A) one or more than one phosphate particles of divalent or trivalent metal being selected from Zn, Fe, Mn, Ni, Co, Ca, Mg and Al and having mean particle size of 3μm or less,
(B) dispersing agent, and water.

As dispersing agent (B), it is preferable one or more than one compound being selected from orthophosphoric acid, polyphosphoric acid and organic phosphonic acid, it is also preferable one or more than one polymer or copolymer obtainable by polymerizing one or more than one monomer being selected from monomer of following chemical formula (1) (wherein $R^1$ is H or $CH_3$, $R^2$ is H or alkyl group containing 1~5C or hydroxyalkyl group containing 1~5C) and α, β unsaturated carboxylic acid monomer with less than 50 wt% of monomer being able to copolymerize with aforesaid monomer.

Further, it is also preferable that one or more than one compound being selected from monosaccharide, polysaccharide and their derivatives, and also preferable one or more than one water soluble polymer compound comprising polymer of vinylacetate or its derivatives or polymer of vinylacetate and a monomer being able to copolymerize with vinylacetate.

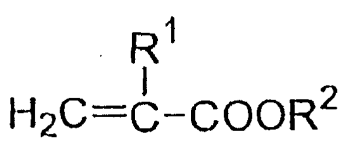 (1)

This invention also includes a treating process of a metal surface for giving excellent press forming property and chemical layer generating property wherein any of treating chemicals explained above is applied on the metal surface and dried, to form a film of 0.05~3g/$m^2$ on the metal surface.

In this invention, galvanized steel, aluminum and aluminum alloy can be used as metallic materials to be

treated. Regarding the galvanized steel, plated metal may be a zinc metal or a zinc alloy with other metal being selected from nickel, iron, aluminum, manganese, chromium, magnesium, cobalt, lead, and antimony. And those produced by any of the plating method of hot dipping galvanizing, electric galvanizing and vacuum evaporation can be used. Regarding a method of applying the treating chemical of this invention to a metal surface, any of the method of rollcoater method, dipping method, shower squeeze method, flow coat method and electrostatic application method can be used.

Operation of this invention will be explained in more detail. As explained above, the purpose of this invention is to provide a new treating chemical and a new treating process in which the treating chemical is applied on the metal surface and dried, and by which a film having excellent properties in press forming and in chemical layer generation is produced on the metal surface.

Inventors of this invention have found out that the application of the treating chemical containing at least one phosphate particles of divalent or trivalent metal being selected from Zn, Fe, Mn, Ni, Co, Ca, Mg and Al and having specific particle size and containing specific dispersing agent to the metal surface may results in producing a phosphate film of the said divalent or trivalent metal on that metal surface.

And they found out that said phosphate film gives excellent property in press forming and gives excellent adhesion property for sealing material, and further it gives excellent property in subsequent step of chemical layer generation by smoothly precipitating a phosphate crystals of the said chemical layer over said phosphate film of this invention.

Accordingly, the surface treating process of the invention is able to give the excellent press forming property to the metallic material, and is able to generate a chemical layer of zink phosphate easily on the metallic material in the subsequent chemical layer generation step.

One or more than one phosphate particle of divalent or trivalent metal being selected from Zn, Fe, Mn, Ni, Co, Ca, Ma, Al in main constitution (A) of this invention have the similar composition to the composition of the liquid and to the composition of chemical layer generated in the subsequent chemical layer generation step and any problems may not arise in the performance of the chemical layer being generated, when a part of the layer of this invention may dissolve into the liquid in the chemical layer generation step. Also any problems may not arise when a part of the film of this invention is incorporated as a core into the chemical layer being generated.

The example of phosphate of divalent or trivalent metal of this invention may be shown below. Generally phosphate of divalent or trivalent metal exists as 2 hydrated or 4 hydrated compounds. However, they are simplified as an anhydrous salt since the number of the hydration water may not show any effects in this invention.

$Zn_3(PO_4)_2$, $Zn_2Fe(PO_4)_2$, $Zn_2Ni(PO_4)_2$, $Ni_3(PO_4)_2$, $Zn_2Mn\ (PO_4)_2$, $Mn_3(PO_4)_2$, $Mn_2Fe(PO_4)_2$, $Ca_3(PO_4)_2$, $Zn_2Ca(PO_4)_2$, $FePO_4$, $AlPO_4$, $Co_3(PO_4)_2$, $Mg_3(PO_4)_2$.

In order to improve the press forming property, the phosphate film of this invention preferably uniformly and closely covers the metal surface. Therefore, the phosphate particles in the phosphate film of this invention are considered more preferable to be small particles in size. Further, in the usual chemical layer generation step, it is effective to supply many core crystals of phosphate. Therefore it is preferable to use small particles in size. Still further, size of phosphate particles of divalent or trivalent metal of this invention is preferable to be less than 3 μm, since they have to be well dispersed in the aqueous treating chemicals of this invention.

The phosphate particles of divalent or trivalent metal' in (A) of this invention may emerge as cores in the succeeding chemical layer generating step, and it also promotes the reaction of precipitating of the crystals of the chemical layer. Namely, a part of the phosphate particles of divalent or trivalent metal of this invention being formed on the metal surface may dissolve into the liquid chemicals in chemical layer generating step and may supply the phosphate component to the liquid chemicals in chemical layer generating step. It may increase the concentration of phosphate of the liquid chemicals in chemical layer generating step near the surface of the metal, and may strongly promote the generation of precipitation of the crystals of the chemical layer at the surface of the metal.

Then, dispersing agent (B) of this invention is explained. The inventor of this invention found that the press forming property and the adhesion property for sealing material are improved, and chemical layer of zinc phosphate is smoothly generated on the metal surface in the chemical layer generating step by only applying the treating chemicals containing the specified dispersing agent explained below to the metal surface and then drying it.

The dispersing agent (B) of this invention has a function of stabilizing the dispersion of phosphate particles of divalent or trivalent metal, as well as a function of fixing the phosphate particles of divalent or trivalent metal on the metal surface.

Namely, dispersing agents of this invention are absorbed on the surface of phosphate particles of divalent or trivalent metal, and prevent a collision of phosphate particles of divalent or trivalent metal by their repulsive force and steric hindrance action caused by their electric charge and prevents their flocculation and sedimentation.

Further, dispersing agents of this invention have an absorption ability to the metal surface, and make to fix the phosphate particles of divalent or trivalent metal to the metal surface. By this function, excellent properties in press forming and chemical layer generation step may emerge only by applying the treating chemical of this invention to the metal surface and drying it.

In this invention, one or more than one phosphate being selected from orthophosphoric acid, polyphosphoric acid and organic phosphonic acid may be contained in the dispersing agent (B). Pyrophosphoric acid, triphosphoric acid, trimetaphosphoric acid, tetrametaphosphoric acid, hexametaphosphoric acid as well as their alkali metal salt and their ammonium salt may be used as polyphosphoric acid.

And amino trimethylene phosphonic acid, 1-hydroxyethylidene-1 1-diphosphonic acid, ethylenediaminetetramethylene phosphonic acid, diethylenetriamine pentamethylene phosphonic acid, as well as their alkaline metal salt may be used as organic phosphonic acid compound. In addition, it is not hindered whether to use one type from orthophosphoric acid, polyphosphoric acid and organic phosphonic acid explained above or to use more than one type of them in combination.

In this invention, following compounds may also be used as dispersing agent. One or more than one polymer or copolymer obtainable by polymerizing one or more than one monomer being selected from monomer of chemical formula(1) (wherein $R^1$ is H or $CH_3$, $R^2$ is H or alkyl group containing 1~5 C or hydroxyalkyl group containing 1~5 C) and α, β unsaturated carboxylic acid monomer with less than 50 wt% of monomer being able to copolymerize with the afore said monomer.

As monomers of chemical formula(1) (wherein $R^1$ is H or $CH_3$, $R^2$ is H or alkyl group containing 1~5 C or hydroxyalkyl group containing 1~5 C), compounds as explained below may be used.
Methyl acrylate, ethyl acrylate, propyl acrylate, butyl acrylate, pentyl acrylate, methyl methacrylate, ethyl methacrylate, propyl methacrylate, butyl methacrylate, pentyl methacrylate, hydroxymethyl acrylate, hydroxyethyl acrylate, hydroxypropyl acrylate, hydroxybutyl acrylate, hydroxypentyl acrylate, hydroxymethyl methacrylate, hydroxyethyl methacrylate, hydroxypropyl methacrylate, hydroxybutyl methacrylate, hydroxypentyl methacrylate.

As α, β unsaturated carboxylic acid monomer, it is possible to use acrylic acid, methacrylic acid and maleic acid. As monomer being able to copolymerize with afore said monomer, it is able to use vinyl acetate, styrene, vinyl chloride and vinyl sulfone acid.

It is possible to use polymers obtained by polymerizing 1 type of monomer explained above and to use copolymers obtained by copolymerizing several types of monomers explained above.

In this invention, one or more than one compound being selected from monosaccharide, polysaccharide and their derivative may also be used as dispersing agent. As basic configuration saccharide of monosaccharide, polysaccharid and their derivative used in this invention, following compound may be selected. Fructose, tagatoses, psicose, thulbose, erythrose, threose, ribose, arabinose, xylose, lyxose, allose, altrose, glucose, mannose, gulose, idose, galactose and talose.

Accordingly, it can be used above basic configuration saccharide itself as being monosaccharide, and homopolysaccharide or heteropolysaccharide of above basic configuration saccharide as being polysaccharide. Further, monosaccharide being obtained by etherealizing the basic configuration saccharide by substituting its hyroxyl group with $NO_2$, $CH_3$, $C_2H_4OH$, $CH_2CH(OH)CH_3$, $CH_2COOH$ may be used as derivatives in this invention. Also, homopoly saccharide and heteropoly saccharide containing monosaccharides being obtained by above substitution may be used as derivatives. Further, combination of several monosaccharide, polysaccharide and their derivatives may be used in this invention.

In some cases, saccharides are classified monosaccharide and polysaccharide by degree of their hydrolysis. However, in this invention, saccharides possible to produce not less than 2 monosacchaides by hydrolysis are classified as polysaccharide and saccharides impossible to be hydrolysed further are classified as mono saccharide.

In the application of this invention, the effect is not influenced by configuration and optical activity of the basic configuration saccharides, therefore, it can be used D-monosaccharide, L-monosaccharide and the compound of any combination of optical activity(+,-).

It can further be used alkali metal salt and ammonium salt of monosaccharide, polysaccharide and their derivatives explained above in order to raise a water solubility of monosaccharide, polysaccharide and their derivatives. Further, they may be used after being dissolved into the organic solvent when they are difficult to dissolve directly into the water.

In this invention, one or more than one water soluble polymer compound comprising polymer of vinylacetate or its derivative or copolymer between vinylacetate and monomer being able to copolymerize with vinylacetate may be used as dispersing agent. As polymer of vinyl acetate or its derivative, following compounds may be used. Polyvinyl alcohol which is a saponification product of vinylacetate polymer, cyanoethylate polyvinyl alcohol which is a cyanoethylate product between polyvinyl alcohol and acrylonitrile, formalate polyvinyl alcohol which is a acetalated product of polyvinyl alcohol by formalin, urethane polyvinyl alcohol which is a urethane product between polyvinyl alcohol and urea and water soluble polymer compounds which are obtained by introducing carboxyl group or sulfone group or amid group to the polyvinyl alcohol. As monomer being able to copolymerize with vinylacetate in this invention, acrylic acid, crotonic acid and maleicacid anhydride are possible to be used.

As far as they are water soluble, compounds of polymer of vinylacetate or its derivatives or copolymer between vinylacetate and monomer being able to copolymerize with vinylacetate of this invention are possible to exhibit sufficiently their effects. Therefore, their effects are not influenced by the degree of polymerization and introduction rate of the functional group. And it is possible to use 1 type of monomer or copolymer, also possible to use several types in combination.

When the metallic material to be treated is a galvanized steel, for example, treating chemicals of this invention are applied to the clean surface being obtained by galvanization or degreasing and or water rinsing. In operation, however, defects such as oxidation and corrosion may appear on the metal surface. When such defects are observed, alkali metal salt or ammonium salt may be added to the solution. In these cases,alkali metal salt or ammonium salt can be selected from the group as shown below. Orthophosphate, metaphosphate, orthosilicate, metasilicate, carbonate, bicarbonate, nitrate, nitrite, sulfate, borate and organic salt. Also, several compounds as shown above may be used in combination.

Further, usual chelating agent and condensed phosphate may also be added to the treating chemicals in order to cancel the adverse effects due to cations being brought in to the treating chemicals in operation. In this invention, treating chemicals are applied to the metal surface and dried, and form a film of 0.05~3g/$m^2$ on the metal surface. When it is less than 0.05g/$m^2$, the film cannot sufficiently cover the metal surface, and the excellent property in press forming cannot be realized. And when it is over 3g/$m^2$, powdering defects may arise and the adhesion property for sealing material may be damaged. It is more preferable to be at 0.1~1g/$m^2$.

EMBODIMENT EXAMPLE

Hereunder, the function of the surface treatment of this invention will be explained in more detail by showing embodiment examples and comparative examples. In these examples, zinc phosphate bath is shown as an example of liquid used in chemical layer generation step, however this invention are not limited to the liquid.

[Test Piece]

EG : (electric galvanized steel sheet on both sides, galvanized volume is 20 g/$m^2$)
GA (steel sheet, hot dip coated on both sides with zinc alloy, plated volume is 45 g/$m^2$)
GI : (hot dip galvanized steel sheet on both sides, galvanized volume is 60g /$m^2$)
Aluminum alloy(AlCOA No. 6022)

[Alkaline degreasing]

For test pieces except alminum alloy, alkali degreasing was performed by using aqueous solution containing 2 % of FINE CLEANER L-4460A(trade name of Nihon Parkerizing Co., Ltd) and 1.4 % of FINE CLEANER L4460B (trade name of Nihon Parkerizing Co., Ltd) at 42 °C. For aluminum alloy, aqueous solution containing 3 % of FINE CLEANER 315(trade name of Nihon Parkerizing Co.,) of 60 °C was used.

[Zinc phosphate solution in chemical layer generating step]

Properties for chemical layer generation of this invention (appearance, weight of layer) were evaluated by using chemical layer generating solution of zinc phosphate as shown in Table 1.

[Treating chemicals of this invention]

In Table 2 are compositions of the treating chemicals shown in claim 2 of this invention. Orthophosphoric acid, polyphosphoric acid and organic phosphonic acid were selected from chemical reagent and marketed products(for example made by Nihon Monsanto Co. ).

PH of the treating chemicals of this invention is not designated, however, pH of the treating chemicals was preferable to be adjusted near to the neutrality by using sodium hydroxide solution since it is necessary to prevent a dissolution of phosphate particles of divalent or trivalent metal into the treating chemicals when the pH is remarkably low.

[Embodiment example 1]

100 mL of 1 mol/L zinc sulfate solution and 100 mL of 1 mol/L sodium 1-hydrogen phosphate solution were added alternately into 1 L of 0.5 mol/L iron(II) sulfate solution at 50 t to produce sediments. The solution with the sediments was kept at 90 °C for one hour to mature the sediment, and then rinsed 10 times by inclination. The sediment

was found to be phosphophyllite($Zn_2Fe(PO_4)_2 \cdot 4H_2O$) partially containing ferrous phosphate by X ray diffraction analysis after it was filtered and dried. To 100 g of this phosphophyllite, 1 kg of solution prepared by diluting the dispersing agent in Table 2 with water to 10 % was added, then ground in a ball mill with 0.5 mm diameter zirconia beads for about one hour. After this grinding, the treating chemical of this invention was prepared by adjusting the concentration of phosphophyllite in the suspension liquid to be 3 % with tap water. Mean particle size suspended in this treating chemical was 0.5 μm measured by laser-diffraction/diffusion particle-size-distribution-analyzer (LA-920, Produced by Horiba Seisakusho).

The test pieces were cleaned by degreasing and water rinsing, and the treating chemicals of this invention were applied on the cleaned surface, then dried by hot air oven the temperature of which is set to become 100°C. The weight of the film thus being produced was 0.3 g/m$^2$.

To these test pieces, 1.5 g/m$^2$ of press oil (trade name: NOXRUST 550 HN, Parker Kosan Co.,Ltd) was applied, and ① properties in press forming and ② adhesion strength for sealing material were investigated. Further, these test pieces were immersed into the chemical layer generating solution A in Table 1 at 45 °C in order to investigate the chemical layer generating properties by measuring its appearance as well as its weight of the chemical layer.

[Embodiment example 2]

100 mL of 1 mol/L zinc sulfate solution and 100 mL of 1 mol/L sodium 1-hydrogen phosphate solution were added alternately into 1 L of 0.5 mol/L iron(II) sulfate solution at 50 °C to produce sediments. The solution with the sediments was kept at 90 °C for one hour to mature the sediment, and then rinsed 10 times by inclination. The sediment was found to be phosphophyllite($Zn_2Fe(PO_4)_2 \cdot 4H_2O$) partially containing ferrous phosphate by X ray diffraction analysis after it was filtered and dried. To 50 g of this phosphophyllite, 1 kg of solution prepared by diluting the dispersing agent in Table 2 with water to 10 % was added, then ground in a ball mill with 0.5 mm diameter zirconia beads for about one hour. After this grinding, the treating chemical of this invention was prepared by adjusting the concentration of phosphophyllite in the suspension liquid to be 2 % with tap water. Mean particle size suspended in this treating chemical was 0.5 μm measured by laser-diffraction/diffusion particle-size-distribution-analyzer (LA-920, Produced by Horiba Seisakusho).

The test pieces were cleaned by degreasing and water rinsing, and the treating chemicals of this invention were applied on the cleaned surface, then dried by hot air oven, the temperature of which is set to become 100°C. The weight of the film thus being produced was 0.2 g/m$^2$.

To these test pieces, 1.5g/m$^2$ of press oil was applied, and ① properties in press forming and ② adhesion strength for sealing material were investigated. Further, these test pieces were immersed into the chemical layer generating solution B in Table 1 at 45 °C in order to investigate the chemical layer generating properties by measuring its appearance as well as its weight of the chemical layer.

[Embodiment example 3]

To 100 g of chemical reagent $Zn_3(PO_4)_2 \cdot 4H_2O$, 1 kg of solution prepared by diluting the dispersing agent in Table 2 with water to 10 % was added, then ground in a ball mill with 0.5 mm diameter zirconia beads for about over hour. After this grinding, the treating chemical of this invention was prepared by adjustingthe concentration of $Zn_3(PO_4)_2 \cdot 4H_2O$ in the suspension liquid to be 3 % with tap water. Mean particle size suspended in this treating chemical was 1.7 μm measured by laser-diffraction/diffusion particle-size-distribution-analyzer(LA-920, Produced by Horiba Seisakusho). The test pieces were cleaned by degreasing and water rinsing, and the treating chemicals of this invention were applied on the cleaned surface, then dried by hot air oven, the temperature of which was set to become 100°C. The weight of the film thus being produced was 0.3 g/m$^2$. To these test pieces, 1.5g/m$^2$ of press oil was applied, and ① properties in press forming and ② adhesion strength for sealing material were investigated. Further, these test pieces were immersed into the chemical layer generating solution A in Table 1 at 45 °C in order to investigate the chemical layer generating properties by measuring its appearance as well as its weight of the chemical layer.

Table 3 shows treating chemicals according to claim 3 of this invention used in embodiment examples. Monomers in Table 3 are polymerized by using ammonium persulfate as catalyst and obtained polymer or copolymer. In the case of monomers with difficulty in water solubility, it was polymerized after it was emulsified using surfactant in the market. PH of the treating chemicals of this invention is not designated, however, pH of the polymer or copolymer is preferably adjusted near to the neutrality by using sodium hydroxide in order to prevent the dissolution of phosphate particles of divalent or trivalent metal when pH of the polymer or copolymer is remarkably low.

[Embodiment example 4]

100 mL of 1 mol/L zinc sulfate solution and 100 mL of 1 mol/L sodium 1-hydrogen phosphate solution were

added alternately into 1 L of 0.5 mol/L iron(II) sulfate solution at 50 °C to produce sediments. The solution with the sediments was kept at 90 °C for one hour to mature the sediment, and then rinsed 10 times by inclination. The sediment was found to be phosphophyllite($Zn_2Fe(PO_4)_2 \cdot 4H_2O$) partially containing ferrous phosphate by X ray diffraction analysis after it was filtered and dried. To 20 g of this phosphophyllite, 1 kg of solution prepared by diluting the dispersing polymer or copolymer in Table 3 with water to 10 % was added, then ground in a ball mill with 0.5 mm diameter zirconia beads for about one hour. After this grinding, the treating chemical of this invention was prepared by adjusting the concentration of phosphophyllite in the suspension liquid to be 1 % with tap water. Mean particle size suspended in this treating chemical was 0.5 μm measured by laser-diffraction/diffusion particle-size-distribution-analyzer (LA-920, Produced by Horiba Seisakusho).

The test pieces were cleaned by degreasing and water rinsing, and the treating chemicals of this invention were applied on the cleaned surface, then dried by hot air in oven, the temperature of which was set to become 100°C. The weight of the film thus being produced was 0.3 $g/m^2$.

To these test pieces, 1.5$g/m^2$ of press oil was applied, and ① properties in press forming and ② adhesion strength for sealing material were investigated. Further, these test pieces were immersed into the chemical layer generating solution A in Table 1 at 45 °C in order to investigate the chemical layer generating properties by measuring its appearance as well as its weight of the chemical layer.

[Embodiment example 5]

200 mL of 1 mol/L zinc nitrate solution and further 200 mL of 1 mol/L sodium 1-hydrogen phosphate solution were added into 1 L of 0.1 mol/L calcium nitrate solution at 50 °C to produce sediments. The solution with the sediments was kept at 90 °C for one hour to mature the sediment, and then rinsed 10 times by inclination. The sediment was found to be scholzite ($Zn_2Ca(PO_4)_2 \cdot 2H_2O$ by X ray diffraction analysis after it was filtered and dried. To 100 g of scholzite, 1 kg of solution prepared by diluting the polymer or copolymer in Table 3 with water to 10 % was added, then ground in a ball mill with 0.5 mm diameter zirconia beads for about one hour. After this grinding, the treating chemical of this invention was prepared by adjusting the concentration of scholzite in the suspension liquid to be 3 % with tap water. Mean particle size suspended in this treating chemical was 0.5 μm measured by laser-diffraction/diffusion particle-size-distribution-analyzer (LA-920, Produced by Horiba Seisakusho). The test pieces were cleaned by degreasing and water rinsing, and the treating chemicals of this invention were applied on the cleaned surface, then. dried by hot air oven, the temperature of which'was set to become 100°C. The weight of the film thus being produced was 0.3 $g/m^2$.

To these test pieces, 1.5$g/m^2$ of press oil was applied, and ① properties in press forming and ② adhesion strength for sealing material were investigated. Further, these test pieces were immersed into the chemical layer generating solution A in Table 1 at 45 °C in order to investigate the chemical layer generating properties by measuring its appearance as well as its weight of the chemical layer.

Table 4 shows treating chemicals according to claim 4 of this invention used in embodiment examples. Monosaccharide, polysccharide and derivative used in the embodiment examples and comparative examples are selected from marketed products being manufactured by Daicel Chemical Industries Co., Daiichi Kogyo Seiyaku Co., Asahi Chemical Industries Co. and Dainihon Seiyaku Co. considering its basic configuration saccharide, degree of polymerization, substituent and degree of substitution.

Of the substituent, the following chemical formula(2) shows glucose as an example of basic configuration saccharides. In case of glucose, hydroxy group in the position of $R^1$, $R^2$ and $R^3$ can be etherified. In case of this embodiment example, substituent and degree of substitution(number of substituted hydroxy group by substituent per 1 unit of the basic configuration saccharide) were varied to observe the effect. And, sodium salt was used in the case of the monosaccharid, polysaccharide and derivatives with low aqueous solubility.

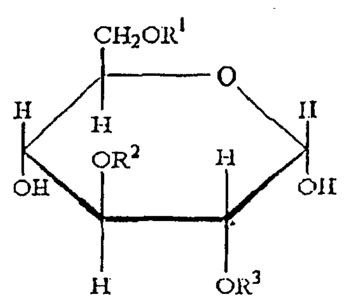

(2)

[Embodiment example 6]

100 mL of 1 mol/L zinc sulfate solution and 100 mL of 1 mol/L sodium 1-hydrogen phosphate solution were added alternately into 1 L of 0.5 mol/L iron(II) sulfate solution at 50 °C to produce sediments. The solution with the sediments was kept at 90 °C for one hour to mature the sediment, and then rinsed 10 times by inclination. The sediment was found to be phosphophyllite($Zn_2Fe(PO_4)_2 \cdot 4H_2O$) partially containing ferrous phosphate by X ray diffraction analysis after it was filtered and dried. To 50 g of this phosphophyllite, 1 kg of solution prepared by diluting the mono saccharide, poly saccharide and their derivatives in Table 4 with isopropyl alcohol and water to 10 % was added, then ground in a ball mill with 0.5 mm diameter zirconia beads for about one hour. After this grinding, the treating chemical of this invention was prepared by adjusting the concentration of phosphophyllite in the suspension liquid to be 2 % with tap water. Mean particle size suspended in this treating chemical was 0.5 μm measured by laser-diffraction/diffusion particle-size-distribution-analyzer (LA-920, Produced by Horiba Seisakusho). The test pieces were cleaned by degreasing and water rinsing, and the treating chemicals of this invention were applied on the cleaned surface, then dried by hot air oven, the temperature of which was set to become 100°C. The weight of the film thus being produced was 0.2 g/$m^2$.

To these test pieces, 1.5g/$m^2$ of press oil was applied, and ① properties in press forming and ② adhesion strength for sealing material were investigated. Further, these test pieces were immersed into the chemical layer generating solution A in Table 1 at 45 °C in order to investigate the chemical layer generating properties by measuring its appearance as well as its weight of the chemical layer.

[Embodiment example 7]

100 mL of 1 mol/L zinc sulfate solution and 100 mL of 1 mol/L sodium 1-hydrogen phosphate solution were added alternately into 1 L of 0.5 mol/L iron(II) sulfate solution at 50 °C to produce sediments. The solution with the sediments was kept at 90 °C for one hour to mature the sediment, and then rinsed 10 times by inclination. The sediment was found to be phosphophyllite($Zn_2Fe(PO_4)_2 \cdot 4H_2O$) partially containing ferrous phosphate by X ray diffraction analysis after it was filtered and dried. To 20g of this phosphophyllite, 1 kg of solution prepared by diluting the mono saccharide, poly saccharide and their derivatives in Table 4 with water to 10 % was added, then ground in a ball mill 1 with 0.5 mm diameter zirconia beads for about one hour.

After this grinding, the treating chemical of this invention was prepared by adjusting the concentration of phosphophyllite in the suspension liquid to be 1 % with tap water. Mean particle size suspended in this treating chemical was 0.5 μm measured by laser-diffraction/diffusion particle-size-distribution-analyzer(LA-920, Produced by Horiba Seisakusho). The test pieces were cleaned by degreasing and water rinsing, and the treating chemicals of this invention were applied on the cleaned surface, then dried by hot air oven, the temperature of which was set to become 100°C. The weight of the film thus being produced was 0.2 g/$m^2$. To these test pieces, 1.5g/$m^2$ of press oil was applied, and ① properties in press forming and ② adhesion strength for sealing material were investigated. Further, these test pieces were immersed into the chemical layer generating solution B in Table 1 at 45 °C in order to investigate the chemical layer generating properties by measuring its appearance as well as its weight of the chemical layer.

[Embodiment example 8]

100 mL of 1 mol/L zinc sulfate solution and 100 mL of 1 mol/L sodium 1-hydrogen phosphate solution were added alternately into 1 L of 0.5 mol/L iron (II) sulfate solution at 50 °C to produce sediments. The solution with the sediments was kept at 90 °C for one hour to mature the sediment, and then rinsed 10 times by inclination. The sediment was found to be phosphophyllite($Zn_2Fe(PO_4)_2 \cdot 4H_2O$) partially containing ferrous phosphate by X ray diffraction analysis after it was filtered and dried. To 20g of this phosphophyllite, 1 kg of solution prepared by diluting the mono saccharide, poly saccharide and their derivatives in Table 4 with water to 10 % was added, then ground in a ball mill with 0.5 mm diameter zirconia beads for about one hour. After this grinding, the treating chemical of this invention was prepared by adjusting the concentration of phosphophyllite in the suspension liquid to be 1 % with tap water. Mean particle size suspended in this treating chemical was 0.5 μm measured by laser-diffraction/diffusion particle-size-distribution-analyzer(LA-920, Produced by Horiba Seisakusho). The test pieces were cleaned by degreasing and water rinsing, and the treating chemicals of this invention were applied on the cleaned surface, then dried by hot air oven, the temperature of which was set to become 100°C. The weight of the film thus being produced was 0.3 g/$m^2$. To these test pieces, 1. 5g/$m^2$ of press oil was applied, and ① properties in press forming and ② adhesion strength for sealing material were investigated. Further, these test pieces were immersed into the chemical layer generating solution A in Table 1 at 45 °C in order to investigate the chemical layer generating properties by measuring its appearance as well as its weight of the chemical layer.

[Embodiment example 9]

To 20g of chemical reagent $Zn_3(PO_4)_2 \cdot 4H_2O$, 1 kg of solution prepared by diluting the mono saccharide, poly saccharide and their derivatives in Table 4 with water in 10 % was added, then ground in a ball mill with 0.5 mm diameter zirconia beads for about one hour. After this grinding, the treating chemical of this invention was prepared by adjusting the concentration of $Zn_3(PO_4)_2 \cdot 2H_2O$ in the suspension liquid to be 1 % with tap water. Mean particle size suspended in this treating chemical was 0.6 μm measured by laser-diffraction/diffusion particle-size-distribution-analyzer (LA-920, Produced by Horiba Seisakusho).

The test pieces were cleaned by degreasing and water rinsing, and the treating chemicals of this invention were applied on the cleaned surface, then dried by hot air oven, the temperature of which was set to become 100°C. The weight of the film being thus being produced was 0.1 g/$m^2$.

To these test pieces, 1.5g/$m^2$ of press oil was applied, and ① properties in press forming and ② adhesion strength for sealing material were investigated. Further, these test pieces were immersed into the chemical layer generating solution A in Table 1 at 40 °C in order to investigate the chemical layer generating properties by measuring its appearance as well as its weight of the chemical layer.

Table 5 shows treating chemicals according to claim 5 of this invention used in embodiment examples. Polymer of vinylacetate or its derivatives are provided by polymerizing vinylacetate using peroxide as an initiator and give the functional group in embodiment examples by saponification reactions and acetalation reactions. And the copolymer of vinylacetate and the monomer which is able to copolymerize with vinylacetate was provided by polymerization reaction of vinylacetate and each monomer.

[Embodiment example 10]

100 mL of 1 mol/L zinc sulfate solution and 100 mL of 1 mol/L sodium 1-hydrogen phosphate solution were added alternately into 1 L of 0.5 mol/L iron(II) sulfate solution at 50 °C to produce sediments. The solution with the sediments was kept at 90 °C for one hour to mature the sediment, and then rinsed 10 times by inclination. The sediment was found to be phosphophyllite($Zn_2Fe(PO_4)_2 \cdot 4H_2O$) partially containing ferrous phosphate by X ray diffraction analysis after it was filtered and dried. To 100 g of this phosphophyllite, 1 kg of solution prepared by diluting the water soluble polymer compound in Table 5 with water to 10 % was added, then ground in a ball mill with 0.5 mm diameter zirconia beads for about one hour. After this grinding, the treating chemical of this invention was prepared by adjusting the concentration of phosphophyllite in the suspension liquid to be 3 % with tap water. Mean particle size suspended in this treating chemical was 0.5 μm measured by laser-diffraction/diffusion particle-size-distribution-analyzer(LA-920, Produced by Horiba Seisakusho).

The test pieces were cleaned by degreasing and water rinsing, and the treating chemicals of this invention were applied on the cleaned surface, then dried by hot air oven, the temperature of which was set to become 100°C. The weight of the film thus being produced was 0.3 g/$m^2$.

To these test pieces, 1.5g/$m^2$ of press oil was applied, and ① properties in press forming and ② adhesion strength for sealing material were investigated. Further, these test pieces were immersed into the chemical layer generating solution C in Table 1 at 45 °C in order to investigate the chemical layer generating properties by measuring its appearance as well as its weight of the chemical layer.

[Embodiment example 11]

200 mL of 1 mol/L zinc nitrate solution and 200 mL of 1 mol/L sodium 1-hydrogen phosphate solution were added to 1 L of 0. 1 mol/L calcium nitrate solution at 50 °C to produce sediments. The solution with the sediments was kept at 90 °C for one hour to mature the sediment, and then rinsed 10 times by inclination. The sediment was found to be scholzite($Zn_2Ca(PO_4)_2 \cdot 2H_2O$) by X ray diffraction analysis after it was filtered and dried. To 100g of this scholzite, 1 kg of solution prepared by diluting the water soluble polymer compound in Table 5 with water to 10 % was added, then ground in a ball mill with 10 mm diameter zirconia beads for about one hour. After this grinding, the treating chemical of this invention was prepared by adjusting the concentration of scholzite in the suspension liquid to be 3 % with tap water. Mean particle size suspended in this treating chemical was 0.5 μm measured by laser-diffraction/diffusion particle-size-distribution-analyzer (LA-920, Produced by Horiba Seisakusho). The test pieces were cleaned by degreasing and water rinsing, and the treating chemicals of this invention were applied on the cleaned surface, then dried by hot air oven, the temperature of which was set to become 100°C. The weight of the film thus being produced was 0.3 g/$m^2$.

To these test pieces, 1.5g/$m^2$ of press oil was applied, and ① properties in press forming and ② adhesion strength for sealing material were investigated. Further, these test pieces were immersed into the chemical layer generating solution C in Table 1 at 45 °C in order to investigate the chemical layer generating properties by measuring its

appearance as well as its weight of the chemical layer.

[Comparative examples]

Table 6 shows treating chemicals used in comparative examples. To 100g of chemical reagent $Zn_3(PO_4)_2 \cdot 4H_2O$, 1 kg of solution prepared by diluting the dispersing agent in Table 6 diluted with water to 10 % was added, then ground in a ball mill with 10 mm diameter zirconia beads by changing grinding hour for each comparative example. After this grinding, the treating chemical was prepared by adjusting the concentration of $Zn_3(PO_4)_2 \cdot 4H_2O$ in the suspension liquid to be 3 % with tap water. Mean particles size suspended in this treating chemical was 0.5 μm in comparative example 1, 6.5 μm in comparative example 2, 8.5 μm in comparative example 3 and 0.5 μm in comparative example 4 measured by laser-diffraction/diffusion particle-size-distribution-analyzer (LA-920, produced by Horiba Seisakusho).

The test pieces were cleaned by degreasing and water. rinsing, and treating chemicals were applied on the cleaned surface, then dried by hot air oven, the temperature of which was set to become 100°C. The weight of the film thus being produced was 0.3 g/$m^2$. comparative example 1~3, and 7.0 g/$m^2$ in comparative example 4. To these test pieces being produced by using the treating chemicals in Table 6, 1.5 g/$m^2$ of press oil was applied as in the embodiment examples, and ① properties in press forming and ② adhesion strength for sealing material were investigated. Further, these test pieces were immersed into the chemical layer generating solution A in Table 1 at 45 °C in order to investigate the chemical layer generating properties by measuring its appearance as well as its weight of the chemical layer.

[Treating steps for test pieces]

(1) Alkaline degreasing
(2) Water washing : room temperature, spray for 30 sec.
(3) Drying : draining
(4) Application of treating chemicals : shown in embodiment example and comparative example.
(5) Drying : the temperature of test pieces is set to become 100°C.
(6) Application of press oil : coating by roll coater.
(7) Alkaline degreasing.
(8) Water washing : room temperature, spray for 30 sec.
(9) Pre-treatment for chemical layer generation : PREPAREN X(trade mark of Nihon Parkerizing Co., Ltd), 3g/L, room temperature, immersing.
(10) Chemical layer generation by zinc-phosphate solution : shown in embodiment example and comparative example.
(11) Water washing : room temperature, spray for 30 sec,
(12) Cleaning by deionized water : room temperature, spray for 30 sec.

[Test evaluation]

(1) Press forming property

Draw-bead test was carried out. Namely, preparing 30 mm×300mm sample from test piece, 1.5 g/$m^2$ of press oil (NOX RUST550HN, Parker Kosan Co., Ltd) was applied to the sample by roll coater , cold drawing the sample at the drawing speed of 260 mm/min using drawing tool having die shoulder/bead shoulder is 2.0 mm R/5. 0 mm R, and maximum press load at which the sample did not break off was measured by changing the press load in a range of 1000 kgf ~ 1600 kgf.

(evaluation)

◎ : maximum press load exceeds 1500 kgf.
○: maximum press load is 1400 kgf ~ 1500 kgf.
Δ : maximum press load is 1200 kgf ~ 1400 kgf
× : maximum press load is less than 1200 kgf

(2) Adhesion strength for sealing material

2 sheet samples of 25 mm × 200 mm were provided from the test piece in embodiment example and comparative example, 1.5 g/$m^2$ of press oil (NOXRUST550HN, Parker Kosan Co,. Ltd) was applied to each sample by roll coater, sealing material for automobile parts on the market was inserted between 2 sheet samples in 1.0 mm thickness and 625 $mm^2$ in area, bonding these together, they are baked under predetermined condition and kept to be bonded. Tensile test was carried out at 50 mm/min and maximum load and cohesive fracture area ratio were observed.

(evaluation)

◎ : maximum load exceeds 17 kgf, cohesive fracture area ratio exceeds 90 %
○ : maximum load : 15~17 kgf, cohesive fracture area ratio is 80~90 %.
Δ : maximum load is less than 15 kgf, cohesive fracture area ratio is 60~80 %
× : maximum load is less than 15 kgf, cohesive fracture area ratio is less than 60 %.

[Evaluation of generation of chemical layer of zinc phosphate]

(1) Appearance

◎ : uniform and good.
○ : partially not uniform
Δ : not uniform and see-through
× : excessively see-through
×× : no chemical layer

(2) Amount of layer

W1(g) : weight of test piece after chemical layer generation.
W2(g) : weight of test piece after being stripped its chemical layer [stripping liquid : ammonium bichromate (2wt%) + aqueous ammonia containing 28 wt% of ammonia (49 wt%) + pure water (49 wt%), room temperature, 15 min, immersion]

$$\text{amount of layer } [g/m^2]=(W_1-W_2)/(\text{surface area of test piece}) \quad (1)$$

Evaluation of press forming property and adhesion strength for sealing material are shown in Table 7 and in Table 8 on embodiment examples and comparative examples. Appearance of chemical layer of zinc phosphate and amount of the layer are shown in Table 9 and in Table 10 for embodiment examples and comparative examples. From Table 7 and 8, it is clear that the press forming property and adhesion strength for sealing of the steel being treated by the embodiment examples are more superior that those being treated by conventional examples. Further, from Table 9, it may be seen that the excellent property for chemical layer generation may be obtained by using the treating process of this invention.

INDUSTRIAL APPLICABILITY

As explained above, the treating chemicals of this invention allows to give the, metallic material an excellent press forming property and an excellent adhesion strength for sealing material by only applying it to a metal surface and drying. Further, the steel sheet being treated by this invention allows to generate an excellent layer of zinc phosphate on the metal surface. And, it is understood that the advantage of this invention is much enough.

Table 1

| constituent | phosphate ion (phosphoric acid) | nitrate ion (nitric acid) | fluoride ion (fluoric acid, silico-fluoric acid) | zinc ion (zinc oxide) | nickel ion (basic nickel carbonate) | manganese ion (manganese carbonate) | PH (NaOH) |
|---|---|---|---|---|---|---|---|
| chemical layer generating solution A | 15 g/L | 5 g/L | 0.05 g/L | 1.2 g/L | 0.9 g/L | 0.4 g/L | 3 |
| chemical layer generating solution B | 15 g/L | 5 g/L | 0.05 g/L | 1.0 g/L | 0.9 g/L | — | 3.3 |
| chemical layer generating solution C | 15 g/L | 5 g/L | 0.15 g/L | 1.0 g/L | 0.9 g/L | 0.4 g/L | 3 |

Table 2

| | | embodiment example 1 | embodiment example 2 | embodiment example 3 |
|---|---|---|---|---|
| phosphoric acid (A) | compound | $Zn_2Fe(PO_4)_2 \cdot 4H_2O$ | $Zn_2Fe(PO_4)_2 \cdot 4H_2O$ | $Zn_2Fe(PO_4)_2 \cdot 4H_2O$ |
| | concentration (%) | 3 | 2 | 3 |
| | particle size (μm) | 0. 5 | 0. 5 | 1. 7 |
| orthophosphoric acid and polyphosphoric acid (B) | compound | tri poly phosphoric acid | hexameta phosphoric acid | – |
| | concentration (%) | 3 | 0. 2 | – |
| organic phosphonic acid compound (B) | compound | – | – | amino-tri-methylene phosphonic acid |
| | concentration | – | – | 0. 3 |
| drying | (℃) | 100 | 80 | 80 |
| film weight | (g/m²) | 0. 3 | 0. 2 | 0. 3 |

Table 3

| | | embodiment example 4 | embodiment example 5 |
|---|---|---|---|
| phosphate (A) | compound | $Zn_2 Fe (PO_4)_2 \cdot 4H_2 O$ | $Zn_2 Fe (PO_4)_2 \cdot 4H_2O$ |
| | concentration (%) | 1 | 3 |
| | particle size | 0.5 | 0.5 |
| monomer of chemical formula (1) | $R^1$ | H | - |
| | $R^2$ | $C_2 H_4 OH$ | - |
| | wt % | 100 | - |
| α, β unsaturated carboxylic acid monomer | compound | - | acrylic acid |
| | wt % | - | 100 |
| monomer being able to copolymerize | compound | - | - |
| | wt % | - | - |
| copolymer | concentration (%) | 0.01 | 3 |
| drying | (°C) | 100 | 80 |
| film weight | ($g/m^2$) | 0.1 | 0.3 |

Table 4

| | | embodiment example 6 | embodiment example 7 | embodiment example 8 | embodiment example 9 |
|---|---|---|---|---|---|
| phosphate | compound | $Zn_2Fe(PO_4)_2 \cdot 4H_2O$ | $Zn_2Fe(PO_4)_2 \cdot 4H_2O$ | $Zn_2Fe(PO_4)_2 \cdot 4H_2O$ | $Zn_2Fe(PO_4)_2 \cdot 4H_2O$ |
| | concentration (%) | 2 | 1 | 1 | 1 |
| | particle size (μm) | 0. 5 | 0. 5 | 0. 5 | 0. 6 |
| monosaccharide, poly saccharide, and their derivative | basic configuration saccharide | glucose | glucose | glucose | glucose |
| | substituent | $CH_3COOH$<br>$NO_2$ | $CH_3COOH$<br>$NO_2$ | $CH_3COOH$ | – |
| | degree of substitution | 1. 8≧ | 1. 8≧ | 0. 7 | 0 |
| | degree of polymerization n | 3000≧ | 3000≧<br>0 | 100≧ | 1 |
| | concentration (%) | 0. 01 | 0. 01 | 0. 1 | 0. 1 |
| drying | (℃) | 80 | 80 | 80 | 80 |
| film weight | (g/m²) | 0. 2 | 0. 1 | 0. 1 | 0. 1 |

Table 5

| | | embodiment example 10 | embodiment example 11 |
|---|---|---|---|
| phosphate (A) | compound | $Zn_2Fe(PO_4)_2 \cdot 4H_2O$ | $Zn_2Fe(PO_4)_2 \cdot 4H_2O$ |
| | concentration (%) | 3 | 3 |
| | particle size (μm) | 0. 5 | 0. 5 |
| polymer of vinylacetate or its derivative | name | polyvinyl alcohol | sulfonic acid denatured polyvinyl alcohol |
| copolymer between vinylacetate and monomer being able to copolymerize with vinylacetate | monomer name | – | – |
| | weight of monomer | – | – |
| | concentration (%) | 0. 06 | 6 |
| drying | (℃) | 80 | 80 |
| film weight | (g/m²) | 0. 3 | 0. 3 |

Table 6

| | | comparative example 1 | comparative example 2 | comparative example 3 | comparative example 4 |
|---|---|---|---|---|---|
| phosphate (A) | compound | $Zn_2Fe(PO_4)_2 \cdot 4H_2O$ | $Zn_2Fe(PO_4)_2 \cdot 4H_2O$ | $Zn_2Fe(PO_4)_2 \cdot 4H_2O$ | $Zn_2Fe(PO_4)_2 \cdot 4H_2O$ |
| | concentration (%) | 3 | 3 | 3 | 3 |
| | particle size (μm) | 0.5 | 6.5 | 8.5 | 0.5 |
| dispersing agent (B) | compound | non | tripoly phosphoric acid | polyvinyl alcohol | tripoly phosphoric acid |
| | concentration (%) | | 3 | 0.02 | 10 |
| drying | (℃) | 80 | 80 | 80 | 80 |
| film weight | ($g/m^2$) | 0.3 | 0.3 | 0.3 | 7.0 |

# Table 7

| | test piece | embodiment example 1 | embodiment example 2 | embodiment example 3 | embodiment example 4 | embodiment example 5 | embodiment example 6 | embodiment example 7 | embodiment example 8 | embodiment example 9 | embodiment example 10 | embodiment example 11 |
|---|---|---|---|---|---|---|---|---|---|---|---|---|
| press forming property | EG | − | − | − | − | − | ◎ | ◎ | ◎ | ◎ | − | − |
| | GA | ◎ | ◎ | ◎ | ◎ | ◎ | − | − | − | − | − | − |
| | GI | ◎ | ◎ | ◎ | ◎ | ◎ | − | − | − | − | − | − |
| | AL | − | − | − | − | − | − | − | − | − | ◎ | ◎ |
| adhesion strength for sealing | EG | − | − | − | − | − | ◎ | ◎ | ◎ | ◎ | − | − |
| | GA | ◎ | ◎ | ◎ | ◎ | ◎ | − | − | − | − | − | − |
| | GI | ◎ | ◎ | ◎ | ◎ | ◎ | − | − | − | − | − | − |
| | AL | − | − | − | − | − | − | − | − | − | ◎ | ◎ |

Table 8

| | test piece | comparative example 1 | comparative example 2 | comparative example 3 | comparative example 4 |
|---|---|---|---|---|---|
| press forming property | EG | - | - | × | - |
| | GA | - | Δ | - | - |
| | GI | × | - | - | - |
| | AL | - | - | - | × |
| adhesion strength for sealing | EG | - | - | × | - |
| | GA | - | Δ | - | - |
| | GI | ◎ | - | - | - |
| | AL | - | - | - | Δ |

# Table 9

| | test piece | embodiment example 1 | embodiment example 2 | embodiment example 3 | embodiment example 4 | embodiment example 5 | embodiment example 6 | embodiment example 7 | embodiment example 8 | embodiment example 9 | embodiment example 10 | embodiment example 11 |
|---|---|---|---|---|---|---|---|---|---|---|---|---|
| appearance | EG | - | - | - | - | - | ◎ | ◎ | ◎ | ◎ | - | - |
| | GA | ◎ | ◎ | ◎ | ◎ | ◎ | - | - | - | - | - | - |
| | GI | ◎ | ◎ | ◎ | ◎ | ◎ | - | - | - | - | - | - |
| | AL | - | - | - | - | - | - | - | - | - | ◎ | ◎ |
| amount of layer (g/m²) | EG | - | - | - | - | - | 2.8 | 2.7 | 2.9 | 2.9 | - | - |
| | GA | 4.1 | 4.0 | 4.2 | 4.3 | 4.1 | - | - | - | - | - | - |
| | GI | 2.4 | 2.6 | 2.5 | 2.4 | 2.3 | - | - | - | - | - | - |
| | AL | - | - | - | - | - | - | - | - | - | 1.5 | 1.4 |

Table 10

| | test piece | comparative example 1 | comparative example 2 | comparative example 3 | comparative example 4 |
|---|---|---|---|---|---|
| appearance | EG | - | - | ◎ | - |
| | GA | - | ◎ | - | - |
| | GI | ◎ | - | - | - |
| | AL | - | - | - | ◎ |
| amount of layer ($g/m^2$) | EG | - | 2.7 | 2.8 | - |
| | GA | - | 4.1 | - | - |
| | GI | 2.5 | - | - | - |
| | AL | - | - | - | 1.4 |

## Claims

1. Treating chemicals to be applied to a metal surface for giving excellent properties in press forming and in chemical layer generation containing as main constituent (A) : one or more than one phosphate particles of divalent or

trivalent metal being selected from Zn, Fe, Mn, Ni, Co, Ca, Mg and Al and having mean particle size of 3 μm or less, (B) : dispersing agent for dispersing above phosphate particles, and water.

**2.** Treating chemicals according to claim 1 wherein dispersing agent (B) is one or more than one compound being selected from orthophosphoric acid, polyphosphoric acid and organic phosphonic acid.

**3.** Treating chemicals according to claim 1 wherein dispersing agent (B) is one or more than one polymer or copolymer obtainable by polymerizing one or more than one monomer being selected from monomer of chemical formula (1) (wherein $R^1$ is H or $CH_3$, $R^2$ is H or alkyl group of 1~ 5 C or hydroxyalkyl group of 1~5 C) and α,β unsaturated carboxylic acid monomer with less than 50 wt% of monomer being able to copolymerize with the afore said monomer.

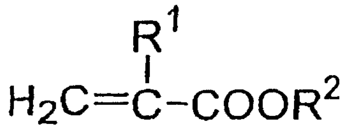

(1)

**4.** Treating chemicals according to claim 1 wherein dispersing agent (B) is one or more than one compound being selected from monosaccharide, polysaccharide and their derivatives.

**5.** Treating chemicals according to claim 1 wherein dispersing agent (B) is one or more than one water soluble polymer compound comprising polymer of vinylacetate or its derivative or copolymer of vinylacetate and a monomer which is able to copolymerize with the vinylacetate.

**6.** Treating process of a metal surface for giving excellent press forming property and chemical layer generating property wherein any of the treating chemicals of claim 1 ~5 is applied to the metal surface and dried to form a film of 0.05 ~ 3 $g/m^2$ on the metal surface.

## INTERNATIONAL SEARCH REPORT

International application No.
PCT/JP01/01499

**A. CLASSIFICATION OF SUBJECT MATTER**

Int.Cl[7] C23C22/07, 22/12, 22/17, 22/18, 22/20, 22/22, C10M173/02, C10M125/24, C10M145/10

According to International Patent Classification (IPC) or to both national classification and IPC

**B. FIELDS SEARCHED**

Minimum documentation searched (classification system followed by classification symbols)
Int.Cl[7] C23C22/00-22/86, C10M125/24, 145/10, 173/02

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 2000-8175, A (Nippon Steel Corporation), 11 January, 2000 (11.01.00) (Family: none) | 1-6 |
| A | JP, 2000-38683, A (Nippon Steel Corporation), 08 February, 2000 (08.02.00) (Family: none) | 1-6 |
| A | EP, 322984, A (Nippon Paint Co., Ltd.), 05 July, 1989 (05.07.89) & JP, 01-172472, A | 1-6 |
| A | JP, 7-166365, A (Nippon Steel Corporation), 27 June, 1995 (27.06.95) (Family: none) | 1-6 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>22 May, 2001 (22.05.01) | Date of mailing of the international search report<br>29 May, 2001 (29.05.01) |
| Name and mailing address of the ISA/<br>Japanese Patent Office | Authorized officer |
| Facsimile No. | Telephone No. |

Form PCT/ISA/210 (second sheet) (July 1992)